# EUROPÄISCHE PATENTSCHRIFT

(11) **EP 0 667 611 B1**
(45) Veröffentlichungstag und Bekanntmachung des Hinweises auf die Patenterteilung: **30.08.2000**
(21) Anmeldenummer: 95200260.8
(22) Anmeldetag: 03.02.1995
(51) Int. Cl.: G11B 15/44

(54) **Magnetbandkassettengerät zum reversierenden Abspielen von Magnetbandkassetten**
Magnetic tape drive for reverse play of magnetic tape cassettes
Appareil pour bande magnétique à cassette pour déroulement reversible des cassettes à bande magnétique

(30) Priorität: 12.02.1994 DE 4404578
(43) Veröffentlichungstag der Anmeldung: 16.08.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Kunze, Norbert, c/o Philips Patentverwaltung GmbH, D-20097 Hamburg (DE); Müller, Dieter, c/o Philips Patentverwaltung GmbH, D-20097 Hamburg (DE); Gielkens, Marc, c/o Philips Patentverwaltung GmbH, D-20097 Hamburg (DE)
(74) Vertreter: von Laue, Hanns-Ulrich, Dipl.-Ing.

(56) Entgegenhaltungen:
- EP-A- 0 168 856
- EP-A- 0 300 187
- EP-A- 0 396 985
- EP-A- 0 428 219
- EP-A- 0 432 816
- DE-A- 3 544 550
- DE-C- 3 312 134
- US-A- 4 504 877

## Beschreibung

Die Erfindung bezieht sich auf ein Magnetbandkassettengerät zum reversierenden Abspielen von Magnetbandkassetten mit zwei Bandwickeln und Wickeldornen, mittels der jeweils einer der Bandwickel im Spiel- und Schnellspulmodus drehbar ist, wobei zum Zwecke des Schnellspulens von einschiebbaren Drucktastenstangen für schnellen Vorlauf bzw. schnellen Rücklauf eine Übertragungsvorrichtung derart einstellbar ist, daß die Drehbewegung eines Antriebszahnrades für die Schnell-Vorlaufrichtung auf den einen Wickeldorn und für die Schnell-Rücklaufrichtung auf den anderen Wickeldorn übertragbar ist.

Bei diesem aus der DE 33 12 134 C1 bekannten Magnetbandkassettengerät erfolgt das Reversieren mittels eines Zahnräder tragenden Bügels, der verkipp- und verschiebbar ist, um entweder den einen Wickeldorn oder den anderen Wickeldorn anzutreiben. Die Bewegung des Bügels wird mit einer Leitschlitzanordnung bestimmt. Diese Leitschlitzanordnung steuert gleichzeitig die Kipplage einer Trägerplatte, an der der Kopfträger und die Andruckrollen für die Tonwellen angeordnet sind.

Es sind Drucktastenstangen für schnellen Vor- und Rücklauf vorgesehen, die auf den Bügel verstellend einwirken. Mittels der einen Tastenstange wird das Gerät in einen schnellen Vorlauf gebracht; mittels der anderen Tastenstange wird das Gerät in schnellen Rücklauf gebracht. Diese Zuordnung gilt jedoch nur, wenn sich das Gerät in der Wiedergaberichtung 1 befindet. Bei der Wiedergaberichtung 2 (Reversebetrieb) ist die Zuordnung der Drucktastenstangen relativ zur Wiedergaberichtung für schnellen Vor- und Rücklauf umgekehrt.

Die Schrift DE 3544550 A1 (sie enthält die Merkmale der Präambel von Anspruch 1) offenbart ebenfalls eine mechanische Betätigungsvorrichtung für den funktionsrichtigen Schnellspulbetrieb in einem Tonbandgerät mit Reversebetrieb. Die Betätigungsvorrichtung erfolgt hier durch einen mittels der Schnellspultasten verschwenkbaren Schalter und einen Steuerschieber, der in Abhängigkeit des Reverseschalters (Bestimmung der Wiedergaberichtung) unterschiedlich vom verschwenkbaren Schalter angesteuert wird. Der verschwenkbare Schalter ist dazu als Drehkreuz oder alternativ als drehbare Platte ausgebildet, dessen Angriffspunkte am Steuerschieber durch örtlich veränderliche Schaltgabeln bestimmt werden.

Es ist Aufgabe der Erfindung, ein mechanisch einfacher aufgebautes Magnetbandkassettengerät der eingangs erwähnten Art zu schaffen, bei dem sichergestellt ist, daß unabhängig von der vor dem Schnellauf eingestellten Wiedergaberichtung die Zuordnung der Schnellauf-Funktionen Vorlauf oder Rücklauf zu den Drucktastenstangen gleich ist.

Die gestellte Aufgabe ist nun erfindungsgemäß gelöst durch ein Magnetbandgerät nach Anspruch 1.

Nach einer weiteren Ausgestaltung der Erfindung ist vorgesehen, daß die Logikplatte einen Mitnehmer aufweist, der abhängig von der Position der Logikplatte und somit abhängig von der Wiedergaberichtung in Führungsschlitze der flächig übereinander laufenden Drucktastenstangen eingreift und entsprechend der Gestaltung der Führungsschlitze von der einen Drucktastenstange beim Einschieben mitgenommen wird, während die andere Drucktastenstange an dem Mitnehmer vorbeifährt.

Der Vorteil einer derartigen Anordnung besteht darin, daß durch nur ein zusätzliches Teil bei extrem geringem Mehrbedarf an Platz die gewünschte Funktion erreichbar ist.

Nach einer weiteren Ausgestaltung der Erfindung ist vorgesehen, daß die Logikplatte einen Ansatz und eine Anlauffläche aufweist, zwischen die ein Stift eines Bügels der Übertragungsvorrichtung greift, wobei der Ansatz dann, wenn die Logikplatte von einer im ausgefahrenen Zustand verharrenden Drucktastenstange gegen ein Verschieben gesichert ist, einen Anschlag für den Stift des Bügels bildet, damit ein Nocken der anderen Drucktastenstange bei deren Einschieben den Stift und damit den Bügel an dem Anschlag entlang verschieben kann, während die Drucktastenstange, an der die Logikplatte verriegelt ist, diese mit einschiebt,und dabei deren Auflauffläche den Stift mit dem Bügel verschiebt.

Die Erfindung wird anhand der Zeichnungen näher erläutert. Es zeigen:
Fig. 1 eine Ansicht des Magnetbandkassettengerätes, das auf einer Chassisplatte aufgebaut ist, von der Antriebsseite her gesehen,
Fig. 2 das Magnetbandkassettengerät von der Kopfseite her gesehen,
Fig. 3 eine schaubildliche Darstellung des Zusammenwirkens der Schieber zweier Drucktastenstangen zusammen mit einer verschwenkbaren Trägerplatte und einer Logikplatte, die auf den Bügel einer Schnellspulvorrichtung einwirkt.

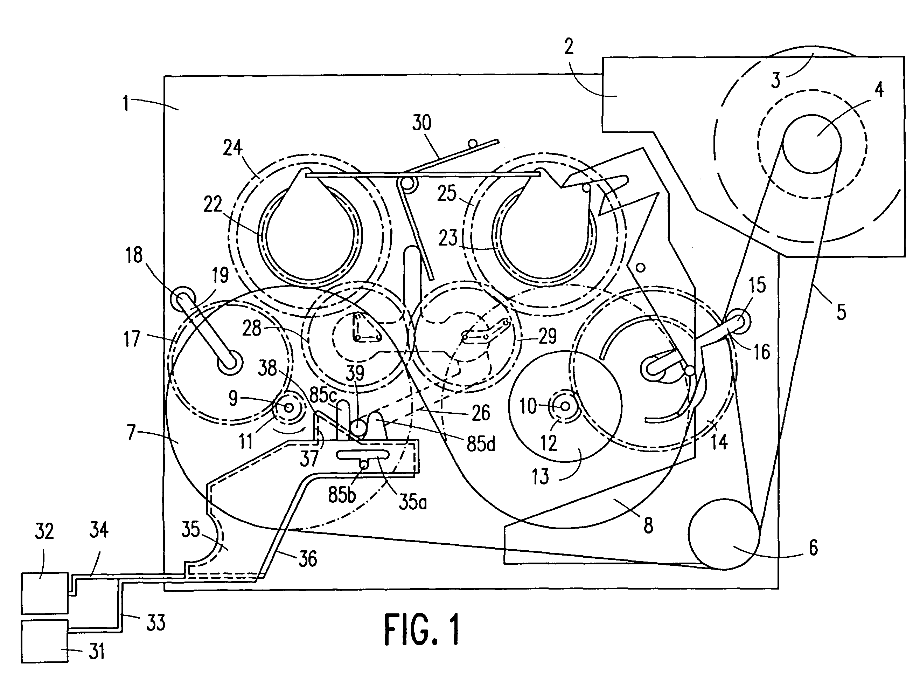

Das Magnetbandkassettengerät gemäß Fig. 1 weist eine Chassisplatte 1 auf, die über eine Stütze 2 einen nur in einer Richtung umlaufenden Antriebsmotor 3 trägt. Das Abriebsritzel 4 des Motors 3 führt eine Peese 5, die über eine Umlenkrolle 6 über Schwungräder 7 und 8 derart geführt ist, daß die Schwungräder gegensinnig drehen. Die Schwungräder 7 und 8 sind in der Chassisplatte 1 gelagert. Die Schwungscheibe 7 ist fest verbunden mit einer Tonwelle 9, und die Schwungscheibe 8 ist fest verbunden mit einer Tonwelle 10. Weiterhin ist die Schwungscheibe 7 mit einem Zahnrad 11 verbunden; und die Schwungscheibe 8 ist mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 17 ist drehbar um eine Schwenkachse 18 mittels eines schematisch dargestellten Schwenkarmes 19.

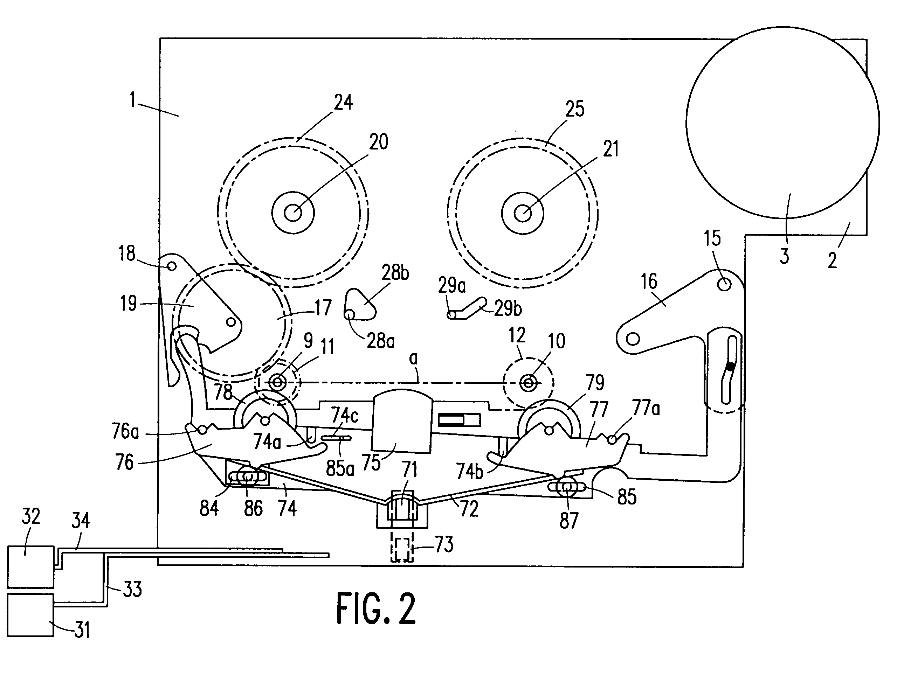

Wie in Fig. 2 dargestellt, sind drehbar in der Chassisplatte 1 Wickeldorne 20 und 21 gelagert. Diese Wickeldorne 20 und 21 sind fest verbunden mit Schnellspulrädern 22, 23. über Rutschkupplungen sind mit den Wickeldornen 20, 21 Spielräder 24, 25 verbunden.

Eine Übertragungsvorrichtung 26, die verschiebbar in der Chassisplatte 1 gelagert ist, trägt nebeneinander zwei Zahnräder 28, 29. Eine Feder 30 drückt die Übertragungsvorrichtung 26 immer in eine in Fig. 1 dargestellte Ausgangsposition.

Die Übertragungsvorrichtung 26 trägt zwei Stifte 28a und 29a, die in einem dreieckigen Loch 28b bzw. einem Schlitz 29b der Chassisplattte verschiebbar sind. Das Loch 28b und der Schlitz 29b begrenzen den Bewegungsspielraum der Übertragungsvorrichtung 26.

Zum schnellen Vor- und Rücklauf sind zwei Tasten 31 und 32 vorgesehen. Über Tastenstangen 33 und 34 sind diese Tasten 31, 32 mit Schiebern 35, 36 verbunden. Die Schieber 35 und 36 wirken auf einen Arm der Übertragungsvorrichtung 26 ein. Dazu sind die Schieber 35,36 mit Ansätzen 37,38 versehen. Diese Ansätze 37 und 38 arbeiten auf einen Stift 39 der Übertragungsvorrichtung 26.

Fig. 1 zeigt oberhalb des eine Chassisplatte bildenden Gestells 1 unter anderem die Schwungräder 7, 8 und Zahnräder des Laufwerkes mit den Tastenstangen 33, 34 der Schieber 35, 36. Ein anderer Teil des Laufwerkes ist auf der anderen Seite der Chassisplatte vorgesehen und in Fig. 2 dargestellt.

Von einem nicht dargestellten Mechanismus ist eine in Fig. 2 dargestellte Trägerplatte 74 verstellbar. Dem Verstellen dient ein Nocken 71 dieses nicht dargestellten Mechanismus. Dieser Nocken 71 wirkt, wie sich aus Fig. 2 ergibt, mit einer Blattfeder 72 zusammen und erstreckt sich durch einen Längsschlitz 73 in der Chassisplatte 1 hindurch. Die Blattfeder 72 drückt mit ihren freien Enden gegen Halterungen 76, 77, die auf der Trägerplatte 74 gelagert sind. Diese Trägerplatte 74 trägt in ihrer Mitte den Magnetkopf 75 und beiderseits des Magnetkopfes 75 die um Lagerstellen 76a, 77a schwenkbare Halterungen 76, 77, in denen Andruckrollen 78, 79 gelagert sind. Die Halterungen werden bei zurückgezogener Trägerplatte 74 gegen Anschläge 74a, 74b der Trägerplatte 74 gedrückt.

In der Trägerplatte 74 sind parallel zu der Verbindungslinie a zwischen den Tonwellen 9, 10 Längsschlitze 84, 85 angeordnet, in denen Leitstifte 86, 87 verschiebbar sind.

Es ist ein nicht dargestellter Schwenkmechanismus vorgesehen, mit dem die Trägerplatte 74 gegenüber der Linie a verschwenkbar ist, um für den Vorwärtslauf im Spielbetrieb die Andruckrolle 79 an die Tonwelle 10 und im Rückwärtslauf im Spielbetrieb die Andruckrolle 78 an die Tonwelle 6 anzudrücken. Die Funktionsweise dieses Schwenkmechanismus ist hier nicht von Bedeutung. Wichtig ist nur, daß die Trägerplatte im Vorwärts- und Rückwärts-Spielbetrieb gegenüber der Linie a unterschiedliche Kippstellungen aufweist.

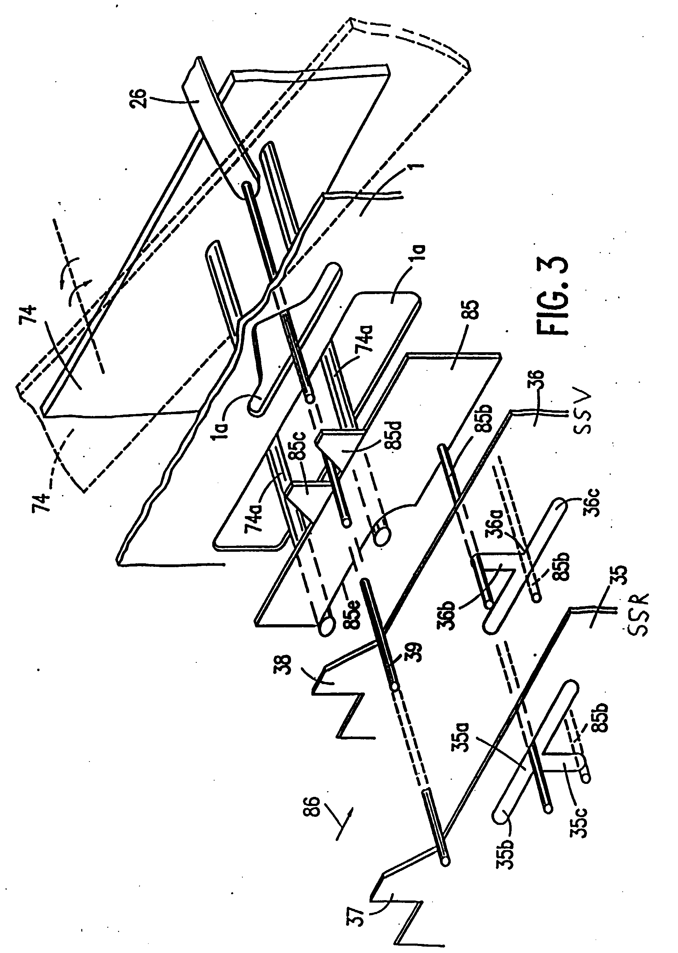

Diese Kippstellungen sind in Fig. 3 deutlicher herausgearbeitet. Fig. 3 zeigt eine schaubildliche Darstellung des Zusammenwirkens von zu Schiebern ausgeweiteten Teilen 35, 36 der Drucktastenstangen 33,34 mit der Trägerplatte 74 und einer Logikplatte 85. Die Trägerplatte 74 ist mit zwei parallel von ihr abstehenden Stiften 74a versehen, die durch eine Öffnung 1a in der Chassisplatte 1 hindurchgreifen bis an Betätigungskanten 85e der Logikplatte 85. An der Logikplatte 85 ist ein weiterer Stift 85b vorgesehen, der entgegengesetzt zu den Stiften 74a durch T-förmige Nuten 35a und 36a der Schieber 35 und 36 hindurchgreift.

Bei der Darstellung nach Fig. 3, die das Zusammenspiel der Stifte 85a und 85b mit den Schiebern 35 und 36 und der Trägerplatte 74 im Vorwärts-Spielbetrieb wiedergibt, befindet sich der Stift 85b im Querteil 35b der T-förmigen Nut 35a, während er sich im Stammteil 36b der T-förmigen Nut 36a befindet. Weiterhin befinden sich die Ansätze 37 und 38 vor dem Stift 39 der Übertragungsvorrichtung 26. Die Logikplatte 85 ist mit einem Ansatz 85c und einem Ansatz 85d versehen. Der Stift 39 greift ständig zwischen die Auflaufnase 85c und den Auflaufnocken 85d.

Man erkennt aus Fig. 3, daß bei der mit ausgezogenen Linien dargestellten Stellung der Trägerplatte 74 im Vorwärts-Spielbetrieb und der daraus resultierenden Stellung der Logikplatte 85 der Stift 85b in dem Querteil 35b der T-förmigen Nut 35a in Richtung des Pfeiles 86 verschoben werden kann, während der Stift 85b im Stammteil 36b des Schiebers 36 festgelegt ist. Das bedeutet, daß das Stammteil 36b beim Einschieben des Schiebers 36 den Stift 85b und damit die Logikplatte 85 mitnimmt. Die Übertragungsvorrichtung 26 wird damit in Längsrichtung derart verschoben, daß das Schnellspulrad 23 über das Zahnrad 29 von dem Zahnrad 13 der Tonwelle 10 angetrieben wird. Wird aus dem gerade behandelten Vorwärts-Spielbetrieb der Schieber 35 für schnellen Rücklauf betätigt, dann ist die Logikplatte 85 über den Stift 85b in dem Stammteil 36b der T-förmigen Nut 36a gefangen. Die Logikplatte 85 kann sich also nicht in Einschubrichtung bewegen. Das bedeutet, daß beim Einschieben des Schiebers 35 für schnellen Rücklauf die Auflauffläche 37 den Stift 39 zwischen der Auflaufnase 85c und dem Auflaufnocken 85d hochdrückt. Damit verschiebt sich die Übertragungsvorrichtung 26 nach oben und links, womit das Schnellspulrad 22 über die Zahnräder 28 und 29 vom Zahnrad 13 angetrieben wird. Damit ist der schnelle Rücklauf eingeleitet.

Im Rückwärts-Spielbetrieb nimmt die Trägerplatte 74 die in Fig. 3 gestrichelt dargestellte Stellung ein. Dies hat zur Folge, daß der Stift 85b nunmehr in dem Stammteil 35c gefangen ist, während er in dem Querteil 36c in Richtung des Pfeiles 86 verschieblich ist. Wird nun im Rückwärts-Spielbetrieb der Schieber 36 für schnellen Vorlauf in Richtung des Pfeiles 86 eingeschoben, dann drückt der Schieber 36 über den Ansatz 38 den Stift 39 zwischen den Ansätzen 85c und 85d nach oben. Damit wird ein Schnellauf in Richtung des Rückwärts-Spielbetriebs eingeleitet, indem das Zahnrad 13 über die Zahnräder 28, 29 das Schnellspulrad 22 antreibt. Dies bedeutet, daß relativ zu der vorher eingestellten Rückwärts-Spielrichtung in derselben Richtung schnell weitergespult wird. Wird hingegen der Schieber 35 für schnellen Rücklauf in Richtung des Pfeiles 86 eingedrückt, dann wird die Logikplatte 85 und damit der Stift 39 in Pfeilrichtung verschoben, wodurch sich die Übertragungsvorrichtung 26 ebenfalls in diese Richtung verschiebt. So treibt nunmehr das Zahnrad 13 der Tonwelle 10 über das Zahnrad 29 das Schnellspulrad 23 an. Das Laufwerk spult somit entgegengesetzt zur vorher eingestellten Rückwärts-Wiedergaberichtung.

Damit ist die logische Schnellspulrichtung verwirklicht. Beim Eindrücken der Taste 31 für schnellen Rücklauf erfolgt über den Schieber 35 stets ein schneller Rücklauf, und zwar ganz gleich, ob sich das Laufwerk im Vorwärts-Spielbetrieb oder im Rückwärts-Spielbetrieb befindet. Ebenso schaltet das Gerät beim Eindrücken der Taste 32 für schnellen Vorlauf das Gerät über den Schieber 36 immer auf schnellen Vorlauf, und zwar ganz gleich, ob sich das Gerät im Spielmodus für Vorlauf oder für Rücklauf befand.

## Patentansprüche

1. Magnetbandgerät zum reversierenden Abspielen von Magnetbandkassetten mit zwei Bandwickeln und Wickeldornen (20, 21), mittels der jeweils einer der Bandwickel (20 oder 21) im Spiel- und Schnellspulmodus drehbar ist, wobei zum Zwecke des Schnellspulens von einschiebbaren Tastenstangen (33, 34) für schnellen Vorlauf bzw. Rücklauf eine Übertragungsvorrichtung (26) derart einstellbar ist, daß die Drehbewegung eines Antriebszahnrades (13) für den Schnellspulvorlauf auf den einen Wickeldorn (20 oder 21) und für den Schnellspulrücklauf auf den anderen Wickeldorn (20 oder 21) übertragbar ist, dadurch gekennzeichnet,
daß eine Logikplatte (85) zwischen den Drucktastenstangen (33, 34) und der Übertragungsvorrichtung (26) wirksam ist und entsprechend der zuvor eingestellten Bandlaufrichtung in eine Position gebracht wird, welche die Zuordnung der Übertragungsvorrichtung (26) zu den Drucktastenstangen (33, 34) bestimmt, daß die Logikplatte (85) ihre für die richtige Ansteuerung der Übertragungsvorrichtung (26) durch die Drucktastenstangen (33, 34) verantwortliche Stellung von einem Stellorgan (74) ableitet, das über eine Stellungsänderung die Wiedergaberichtung bestimmt, daß dieses Stellorgan (74) eine Trägerplatte für den Tonkopf (75) des Gerätes darstellt, die in jeder Spielrichtung eine andere Kipplage einnimmt und daß die Logikplatte (85) der jeweiligen Kipplage der Trägerplatte folgt.

2. Magnetbandkassettengerät nach Anspruch 1, dadurch gekennzeichnet, daß die Logikplatte (85) einen Mitnehmer (85b) aufweist, der abhängig von der Position der Logikplatte (85) und somit abhängig von der Wiedergaberichtung in Führungsschlitze (35a, 36a) der flächig übereinander laufenden Drucktastenstangen (33, 34) eingreift und entsprechend der Gestaltung der Führungsschlitze (35a, 36a) von der einen Drucktastenstange (33, 34) beim Einschieben mitgenommen wird, während die andere Drucktastenstange (33, 34) an dem Mitnehmer (85b) vorbeifährt.

3. Magnetbandkassettengerät nach einem oder mehreren der Ansprüche 1 bis 2, dadurch gekennzeichnet, daß die Logikplatte (85) einen Mitnehmerstift (85b) aufweist, der in Führungsschlitze (35a, 36a) der flächig übereinander laufenden Schieber (35, 36) der Tastenstangen (33, 34) eingreift und entsprechend der Gestaltung der Führungsschlitze (35a, 36a) von dem jeweiligen Schieber (35, 36) beim Einschieben mitgenommen wird, wenn die Schieber (35, 36) beim unmittelbaren Einwirken auf die Übertragungsvorrichtung (26) diese entgegen dem Modus des logischen Schnellaufes einstellen würden.

4. Magnetbandkassettengerät nach einem oder mehreren der Ansprüche 1 bis 3, dadurch gekennzeichnet, daß die Logikplatte (85) einen Ansatz (85c) und eine Anlauffläche (85d) aufweist, zwischen die ein Stift (39) eines Bügels der Übertragungsvorrichtung (26) greift, wobei der Ansatz (85c) dann, wenn die Logikplatte (85) von einer im ausgefahrenen Zustand verharrenden Drucktastenstange (33, 34) gegen ein Verschieben gesichert ist, einen Anschlag für den Stift (39) des Bügels (26) bildet, damit ein Nocken (37, 38) der anderen Drucktastenstange (33, 34) bei deren Einschieben den Stift (39) und damit den Bügel (26) an dem Anschlag entlang verschieben kann, während die Drucktastenstange (33, 34), an der die Logikplatte (85) verriegelt ist, diese mit einschiebt und dabei deren Auflauffläche (37, 38) den Stift (29) mit dem Bügel (26) verschiebt.

## Claims

1. A magnetic tape cassette apparatus for reverse playing of magnetic tape cassettes with two tape spools and spool hubs (20, 21), whereby one of the tape spools (20 or 21) is rotatable in the playback or fast winding mode at any given moment, while for the fast winding function a transmission device (26) can be adjusted by means of insertable pushbutton rods (33, 34) for fast forward or fast rewind, respectively, such that the rotary movement of a drive gear (13) for the fast forward direction can be transmitted to the one spool hub (20 or 21) and for the fast rewind direction to the other spool hub (21 or 20), characterized in that a logic plate (85) is active between the pushbutton rods (33, 34) and the transmission device (26) and is brought into a position corresponding to the previously set tape direction, which position determines the application of the transmission device (26) to the pushbutton rods (33, 34), in that the logic plate (85) derives its position responsible for the correct control of the transmission device (26) by the pushbutton rods (33, 34) from an adjustment member (74) which determines the playback direction by means of a change in its position, in that said adjustment member (74) constitutes a support plate for the playback head (75) of the apparatus, which assumes a different pivotal position for each playback direction of the apparatus, and in that the logic plate (85) follows the relevant pivotal position of said support plate.

2. A magnetic tape cassette apparatus as claimed in Claim 1, characterized in that the logic plate (85) comprises a stud (85b) which enters guide slots (35a, 36a) of the pushbutton rods (33, 34) sliding flat over one another, in dependence on the position of the logic plate (85) and thus in dependence on the playing direction, and is taken along by one of the pushbutton rods (33, 34) in accordance with the design of the guide slots (35a, 36a) during insertion, whereas the other pushbutton rod (33, 34) passes the stud (85b) by.

3. A magnetic tape cassette apparatus as claimed in one or several of the Claims 1 to 2, characterized in that the logic plate (85) comprises a catch pin (85b) which engages guide slots (35a, 36a) of the slides (35, 36) of the pushbutton rods (33, 34) sliding flat over one another and which is taken along by the relevant slide (35, 36) during insertion in accordance with the shape of the guide slots (35a, 36a) if the slides (35, 36) in the case of a direct action on the transmission device (26) would adjust the latter in a sense opposed to the prevailing logic fast winding mode.

4. A magnetic tape cassette apparatus as claimed in one or several of the Claims 1 to 3, characterized in that the logic plate (85) comprises a shoulder (85c) and a check surface (85d), between which a pin (39) of a bracket of the transmission device (26) enters, whereby the shoulder (85c) forms an abutment stop for the pin (39) of the bracket (26) when the logic plate (85) is locked against shifting by a pushbutton (33, 34) rod which remains in the pushed state, so that a projection (37, 38) of the other pushbutton rod (33, 34) upon its insertion can shift the pin (39), and thus the bracket (26), beyond the abutment stop, while the pushbutton rod (33, 34) to which the logic plate (85) is locked carries the latter along, so that the projection (37, 38) thereof shifts the pin (29) with the bracket (26).

## Revendications

1. Magnétophone à cassette en vue de la lecture réversible de cassettes à bande magnétique avec deux bobines de bande et deux axes de bobinage (20, 21) à l'aide desquels l'une des bobines de bande (20 ou 21) peut respectivement être amenée en rotation en mode de lecture ou de bobinage rapide, un dispositif de transmission (26) étant réglable en vue du bobinage rapide par des tiges à boutons poussoir (33, 34) coulissantes pour l'avance rapide ou la marche arrière rapide de telle sorte que le mouvement rotatif d'une roue dentée d'entraînement (13) puisse être transmis pour le sens de l'avance rapide sur l'un des axes de bobinage (20 ou 21) et pour le sens de marche arrière rapide sur l'autre axe de bobinage (20 ou 21),
caractérisé en ce
qu'une plaque logique (85) est active entre les tiges à bouton poussoir (33, 34) et le dispositif de transmission (26) et, en fonction du sens d'avance de la bande préalablement réglée, amenée dans une position qui détermine l'affectation du dispositif de transmission (26) aux tiges à bouton-poussoir (33, 34), que la plaque logique (85) dérive sa position responsable de son excitation correcte du dispositif de transmission (26) par les tiges à bouton poussoir (33, 24) d'un organe de réglage (74) qui détermine par l'intermédiaire d'un changement de position le sens de lecture, que cet organe de réglage (74) représente une plaque de support pour la tête audio (75) de l'appareil qui adopte dans chaque sens de lecture une autre position de basculement et que la plaque logique (85) suit la position de basculement respective de la plaque de support.

2. Magnétophone à cassette selon la revendication 1, caractérisé en ce que la plaque logique (85) présente un taquet d'entraînement (85b) qui, en fonction de la position de la plaque logique (85) et, dès lors, en fonction du sens de lecture dans les fentes de guidage (35a, 36a), entre en prise avec les tiges à bouton poussoir (33, 34) superposées dans un plan et, en fonction de la conception des fentes de guidage (35a, 36a), est entraîné par l'une des tiges à bouton poussoir (33, 34) lors de son coulissement tandis que l'autre tige à bouton poussoir (33, 34) passe devant le taquet d'entraînement (85b).

3. Magnétophone à cassette selon une ou plusieurs des revendications 1 ou 2, caractérisé en ce que la plaque logique (85) présente un taquet d'entraînement (85b) qui entre en prise dans les fentes de guidage (35a, 36a) des tiroirs (35, 36) superposés dans un plan des tiges à bouton poussoir (33, 34) et, en fonction de la conception des fentes de guidage (35a, 36a), est entraîné par le tiroir respectif (35, 36) lors de son coulissement alors que les tiroirs (35, 36), en cas d'action directe sur le dispositif de transmission (26), régleraient celui-ci dans le sens contraire au mode de l'avance rapide logique.

4. Magnétophone à cassette selon l'une ou plusieurs des revendications 1 à 3, caractérisé en ce que la plaque logique (85) présente un épaulement (85c) et une surface d'accostage (85d) entre lesquelles s'insère une broche (39) d'un étrier du dispositif de transmission (26), l'épaulement (85c) formant une butée pour la broche (39) de l'étrier (26) lorsque la plaque logique (85) est bloquée par une tige à bouton poussoir (33, 34) rigide à l'état sorti contre le coulissement afin qu'une came (37, 38) de l'autre tige à bouton poussoir (33, 34) lors de son coulissement puisse faire coulisser la broche (39) et dès lors l'étrier (26) contre la butée tandis que la tige à bouton poussoir (33, 34) sur laquelle la plaque logique (85) est verrouillée l'entraîne avec elle et, à cette occasion, sa surface d'accostage (37, 38) fait coulisser la broche (29) avec l'étrier (26).
